# EUROPÄISCHE PATENTANMELDUNG

(11) **EP 4 116 606 A1**
(43) Veröffentlichungstag der Anmeldung: **11.01.2023**
(21) Anmeldenummer: 21184169.7
(22) Anmeldetag: 07.07.2021
(51) Int. Cl.: F16H 55/02, F16H 55/17

(54) **ZAHNRAD MIT GESCHWUNGENER AUSSENKONTUR, SOWIE GETRIEBE UND WERKZEUGMASCHINE MIT EINEM SOLCHEN ZAHNRAD**

(71) Anmelder: Hilti Aktiengesellschaft, 9494 Schaan (LI)
(72) Erfinder: Holzmeier, Georg, 86748 Marktoffingen (DE)
(74) Vertreter: Hilti Aktiengesellschaft Corporate Intellectual Property

(57) **Zusammenfassung**

Die vorliegende Erfindung betrifft ein Zahnrad zur Verwendung in einem Getriebe einer Werkzeugmaschine, wobei das Zahnrad eine Oberseite und eine Unterseite aufweist, sowie eine zentrale Öffnung zur Aufnahme einer Welle des Getriebes der Werkzeugmaschine. Das Zahnrad weist eine erste Höhe h1 und eine zweite Höhe h2 auf, wobei ein erster Abstand d1 zwischen der Oberseite und der Unterseite des Zahnrads an einem Umfangsrand den Wert h1 einnimmt und wobei ein zweiter Abstand d2 zwischen der Oberseite und der Unterseite des Zahnrads im Bereich der zentralen Öffnung den Wert h2 einnimmt, so dass die Oberseite des Zahnrads eine geschwungene, glockenförmige Außenkontur aufweist. In weiteren Aspekten betrifft die Erfindung ein Getriebe mit einem erfindungsgemäßen Zahnrad, sowie eine Werkzeugmaschine mit einem erfindungsgemäßen Zahnrad bzw. erfindungsgemäßen Getriebe.

## Beschreibung

Die vorliegende Erfindung betrifft ein Zahnrad zur Verwendung in einem Getriebe einer Werkzeugmaschine, wobei das Zahnrad eine Oberseite und eine Unterseite aufweist, sowie eine zentrale Öffnung zur Aufnahme einer Welle des Getriebes der Werkzeugmaschine. Das Zahnrad weist eine erste Höhe h1 und eine zweite Höhe h2 auf, wobei ein erster Abstand d1 zwischen der Oberseite und der Unterseite des Zahnrads an einem Umfangsrand den Wert h1 einnimmt und wobei ein zweiter Abstand d2 zwischen der Oberseite und der Unterseite des Zahnrads im Bereich der zentralen Öffnung den Wert h2 einnimmt, so dass die Oberseite des Zahnrads eine geschwungene, glockenförmige Außenkontur aufweist. In weiteren Aspekten betrifft die Erfindung ein Getriebe mit einem erfindungsgemäßen Zahnrad, sowie eine Werkzeugmaschine mit einem erfindungsgemäßen Zahnrad bzw. erfindungsgemäßen Getriebe.

### Hintergrund der Erfindung:

Die Erfindung ist im technischen Bereich der Werkzeugmaschinen angesiedelt, wie sie beispielsweise auf Baustellen verwendet werden. Solche Werkzeugmaschine weisen üblicherweise einen Motor auf, mit dem ein Werkzeug der Werkzeugmaschine angetrieben wird. Bei vielen Werkzeugmaschinen ist zwischen dem Motor und dem Werkzeug ein Getriebe angeordnet, um Bewegungen, Energie und/oder Kräfte zu übertragen. Darüber hinaus weisen die meisten Werkzeugmaschinen eine rotierende Welle auf, um die Bewegung des Motors an das Werkzeug zu übertragen.

Konventionelle Getriebe, wie sie aus dem Stand der Technik bekannt sind, werden üblicherweise mit einem Schmiermittel geschmiert, um optimal arbeiten zu können. Solche Getriebe mit Fett- oder Ölfüllung müssen in geeigneter Weise an den drehenden Wellen der Werkzeugmaschine zum Außenbereich abgedichtet werden. Um ein Austreten des Schmiermittels zu verhindern, sind im Stand der Technik verschiedene Möglichkeiten bekannt. Zum einen können die drehenden Wellen der Werkzeugmaschine mittels eines sogenannten Radialwellendichtrings (RWDR) abgedichtet werden. Ein solcher Radialwellendichtring kann mit festem Sitz im Getriebegehäuse oder Getriebedeckel eingebaut werden. Seine Dichtlippe läuft auf der Oberfläche der sich drehenden Welle und wird meist von einer Schlauchfeder oder Wurmfeder radial auf die Wellenoberfläche gedrückt. Um ein Verschleiß an der Gummilippe zu reduzieren und um die Dichtwirkung des Dichtrings zu gewährleisten, werden hohe Anforderungen an die Beschaffenheit der Wellenoberfläche gestellt; oft wird deshalb die Welle im Bereich der Dichtungslauffläche drallfrei geschliffen. Dies kann allerdings nachteiligerweise zu erhöhten Herstellungskosten für die Welle führen.

Bei einer solchen Abdichtung berühren sich die gegeneinander abzudichtenden Gegenstände, so dass durch diese Berührung ein Reibungsverlust auftritt. Dieser Reibungsverlust kann nachteiligerweise zu einem verringerten Wirkungsgrad des Getriebes bzw. der Werkzeugmaschine führen. Solche Reibungsverluste sind insbesondere bei Werkzeugmaschinen, die durch einen Akkumulator ("Akku") mit elektrischer Energie versorgt werden, unerwünscht, weil dadurch die Reichweite des Akkumulators reduziert werden kann, wobei häufige Akkuwechsel die Arbeitseffizienz der Werkzeugmaschine beeinträchtigen können. Darüber hinaus kann die erwähnte Verlustleistung zu höheren Temperaturen im Getriebe führen, die ebenfalls unerwünscht sind und zu Beschädigungen an der Werkzeugmaschine und ihren Bestandteilen führen können, wenn die Wärme nicht ausreichend abgeführt wird. Ein weiterer Nachteil, der in Verbindung mit Radialwellendichtringen auftritt, ist, dass der Radialwellendichtring ein zusätzliches Bauteil darstellt, das mit einem hohen Montageaufwand bei der Zusammensetzung und Herstellung der Werkzeugmaschine berücksichtigt werden muss. Darüber hinaus stellen Radialwellendichtringe an sich vergleichsweise kostenintensive Bauteile einer Werkzeugmaschine dar.

Eine weitere Möglichkeit, um ein Austreten von Schmiermittel aus dem Getriebe zu verhindern, besteht darin, Labyrinth- bzw. Schleuderscheiben zu verwenden. Die Dichtwirkung beruht auf der Verlängerung des Strömungsweges durch einen abzudichtenden Spalt, wodurch der Strömungswiderstand erhöht wird. Dabei ist die Labyrinthscheibe üblicherweise auf der der rotierenden Welle montiert. Die Wegverlängerung wird in der Regel durch ein Ineinandergreifen von Verkämmungen - zum Beispiel einer Nut-Feder-Geometrie - von Formelementen auf der Labyrinthscheibe und dem feststehenden Getriebegehäuse erreicht. Eine solche Abdichtung unter Verwendung einer Labyrinthscheibe ist vorteilhafterweise berührungsfrei und hat daher weniger Reibungsverluste als eine Abdichtung, die einen Radialwellendichtring umfasst.

Im Stand der Technik ist ferner vorgeschlagenen worden, Schleuderscheiben zu verwenden, um ein Getriebe abzudichten. Eine solche Schleuderscheibe kann ebenfalls auf der rotierenden Welle montiert werden. Die Schleuderscheibe soll durch die Drehbewegung das Schmiermittel vom Getriebeausgang fernhalten, wobei am Getriebeausgang üblicherweise die zu schützenden Lager bzw. Kugellager angeordnet vorliegen. Nachteilig an den Abdicht-Lösungen, die Labyrinth- bzw. Schleuderscheiben umfassen, ist, dass sie für den Getriebeaufbau zusätzliche Bauteile darstellen, was wiederum zu erhöhten Herstellungskosten und einem hohen Montageaufwand führen kann.

Die Aufgabe, die der vorliegenden Erfindung zugrunde liegt, besteht darin, die vorstehend beschriebenen Mängel und Nachteile des Standes der Technik zu überwinden und ein Zahnrad zur Verwendung in einem Getriebe einer Werkzeugmaschine bereitzustellen, das eine sichere und saubere Getriebeabdichtung sicherstellt bei gleichzeitig geringen Herstellungskosten und einem geringen Montageaufwand beim Zusammenbau des Getriebes bzw. der Werkzeugmaschine. Insbesondere soll mit der Erfindung die Anzahl der Bauteile innerhalb der Werkzeugmaschine klein gehalten werden. Darüber hinaus sollen Reibungsverluste, die den Wirkungsgrad der Werkzeugmaschine reduzieren können, minimiert werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Zahnrad zur Verwendung in einem Getriebe einer Werkzeugmaschine vorgesehen. Das Zahnrad weist eine Oberseite und eine Unterseite auf, sowie eine zentrale Öffnung zur Aufnahme einer Welle des Getriebes der Werkzeugmaschine. Das Zahnrad ist dadurch gekennzeichnet, dass es eine erste Höhe h1 und eine zweite Höhe h2 aufweist, wobei ein erster Abstand d1 zwischen der Oberseite und der Unterseite des Zahnrads an einem Umfangsrand den Wert h1 einnimmt und wobei ein zweiter Abstand d2 zwischen der Oberseite und der Unterseite des Zahnrads im Bereich der zentralen Öffnung den Wert h2 einnimmt, so dass die Oberseite des Zahnrads eine geschwungene Außenkontur aufweist. Es ist im Sinne der Erfindung insbesondere bevorzugt, dass die erste Höhe h1 kleiner ist als die zweite Höhe h2. Der Umfangsrand der Zahnscheibe ist vorzugsweise der äußere Bereich des Zahnrads, an dem die Zähne des Zahnrads angeordnet vorliegen. Vorzugsweise ist ein Abstand zwischen Ober- und Unterseite des Zahnrads am Umfangsrand des Zahnrads weniger groß als im zentralen Bereich des Zahnrads. Die geschwungen, vorzugsweise glockenförmige Außenkontur des Zahnrads kommt vorteilhafterweise durch die Verbindung der Bereiche des Zahnrads, die einen ersten Abstand h1 zueinander aufweisen, mit den Bereichen des Zahnrads, die einen zweiten Abstand h2 zueinander aufweisen. Vorzugsweise schmiegt sich die geschwungene Außenkontur des Zahnrads besonders eng an eine Innenseite eines Getriebedeckels des Getriebes der Werkzeugmaschine an, so dass ein Spalt zwischen dem Getriebedeckel und der vorzugsweise geschwungen ausgebildeten Oberseite des Zahnrads überraschend eng ausgebildet sein kann. Durch diesen besonders engen Spalt zwischen der Oberseite des Zahnrads und der Innenseite des Getriebedeckels wird eine besonders wirksame Abdichtung des Getriebes der Werkzeugmaschine ermöglicht und ein Austreten von Schmiermittel effizient verhindert. Die geschwungene Außenkontur des Zahnrads wird im Sinne der Erfindung bevorzugt auch als verlängerte S-förmige ausgebildete Kontur des Zahnrads bezeichnet.

Tests haben gezeigt, dass mit der Erfindung eine Abdichtung des Getriebes der Werkzeugmaschine erheblich verbessert werden kann, indem die Nachteile der aus dem Stand der Technik bekannten Methoden und Vorrichtungen vermieden werden. Die Erfindung führt vorteilhafterweise dazu, dass in der beschriebenen geschwungenen Geometrie des Zahnrads eine Abdichtung bzw. eine Abdichtungsfunktion integriert vorliegt. Darüber hinaus fällt vorteilhafterweise für die Abdichtung des Getriebes an dieser Stelle kein zusätzlicher Bauteil- und Montageaufwand an. Darüber hinaus ermöglicht die Erfindung eine berührungsfreie Abdichtung des Getriebes gegenüber seiner Umgebung, wobei die Berührungslosigkeit zu besonders geringen Reibungsverlusten führt. Dadurch kann mit der Erfindung ein überraschend hoher Wirkungsgrad des Getriebes bzw. der Werkzeugmaschine gewährleistet werden.

Die Integration der Getriebeabdichtfunktion in das bevorzugt glockenförmig ausgebildete Zahnrad hat darüber hinaus folgende Vorteile: (a) berührungslose Abdichtung des Getriebes und auf diese Weise kein bzw. ein reduzierter Verscheiß an den Dichtflächen, (b) keine bzw. erheblich reduzierte Reibungsverluste an der Abdichtung und damit auch eine geringere Getriebetemperatur, (c) ein höherer Getriebewirkungsgrad durch geringere Reibverluste, was besonders bei akkubetriebenen Werkzeugmaschinen von Vorteil ist, (d) geringerer Montageaufwand, da weniger Teile im Getriebe vorhanden sind, und (e) geringere Herstellkosten wegen einer geringeren Anzahl von Teilen im Getriebe.

Es ist im Sinne der Erfindung bevorzugt, dass das vorgeschlagene Zahnrad eine verlängerte, bevorzugt S-förmig ausgebildete Kontur am Außendurchmesser aufweist, wobei glockenähnliche, geschwungene Außenkontur des Zahnrads im Sinne der Erfindung vorzugsweise auch als verlängerte S-förmige ausgebildete Kontur des Zahnrads bezeichnet wird.

Durch diese Ausgestaltung des Zahnrads kann der Strömungsweg für das Getriebefett bzw. Getriebeöl durch den besonders engen abzudichtenden Spalt zwischen Zahnrad und Getriebedeckel vorteilhafterweise verlängert werden. Insbesondere erhöht sich dadurch der Strömungswiderstand des Schmiermittels. Darüber hinaus stellt die bevorzugt S-förmig ausgebildete Außenkontur des Zahnrads eine Art Schleuderscheibe dar, da das Schmierfett in dem Spalt durch die Rotation des Zahnrads nach unten in die Verzahnung gedrückt wird. Dieser Vorteil wird insbesondere dadurch erreicht, dass ein Außendurchmesser der bevorzugt S-förmigen Kontur in eine Raumrichtungen "nach unten" ansteigt und dadurch in diese Raumrichtung "nach unten" immer größere Fliehkräfte am Schmiermittel wirken. Somit wird durch die geschwungene, bevorzugt glockenförmige Ausführung der Oberseite des Zahnrads sowohl die Funktion einer Labyrinthscheibe, als auch einer Schleuderscheibe zur Abdichtung des Getriebes in das vorgeschlagene Zahnrad integriert bzw. nachgeahmt. Das Schmiermittel kann aufgrund der vorteilhaften Gestaltung des Zahnrads den oberhalb des Zahnrads befindlichen Raum nicht erreichen und insbesondere nicht durch das Kugellager in eine Raumrichtung "nach oben" aus dem Getriebe der Werkzeugmaschine entweichen. Insbesondere wird durch die vorteilhafte Ausgestaltung der Außenkontur der Oberseite des Zahnrads das Kugellager besonders gut vor eindringendem Schmiermittel geschützt. Um die Wirksamkeit der vorgeschlagenen Getriebeabdichtung weiter zu verbessern, kann das Kugellager des Getriebes Dichtscheiben aufweisen, die vorzugsweise auf beiden Seiten des Kugellagers angeordnet sein können. Besonders wirksam ist die vorgeschlagene Getriebeabdichtung, wenn als zusätzliche Sicherheitsvorkehrung ein zähflüssiges Schmiermittel verwendet wird.

Es ist im Sinne der Erfindung bevorzugt, dass die Oberseite des Zahnrads ein im Wesentlichen planes Plateau umfasst, wobei ein Abstand zwischen dem Plateau und der Unterseite den Wert h2 einnimmt. Die Oberseite des Zahnrads ist in dem Bereich des Plateaus vorzugsweise im Wesentlichen parallel zu der Unterseite des Zahnrads ausgebildet. Der Begriff «im Wesentlichen parallel» stellt für den Fachmann keine unklare Formulierung dar, weil der Fachmann weiß, dass die Formulierung kleinere Abweichungen zu der mathematisch exakten Parallelität einschließen kann. Diese Abweichungen können beispielsweise in einem Bereich von +/- 5 Grad liegen. Das Plateau bildet vorzugsweise den zentralen Bereich der Oberseite des Zahnrads, wobei dieser zentrale Bereich um die zentrale Öffnung des Zahnrands angeordnet vorliegt.

Die Unterseite des Zahnrads muss im Sinne der Erfindung nicht notwendigerweise eine geschlossene Fläche darstellen. Es ist im Sinne der Erfindung bevorzugt, dass die Unterseite des Zahnrads kreisförmig oder rund ausgebildet ist und von Seitenwänden des Zahnrads begrenzt wird. Die Seitenwände tragen vorzugsweise die Zähne des Zahnrads und bilden den Umfangsrand des Zahnrads. Die Unterseite des Zahnrads kann beispielsweise auch einen ringförmig ausgebildeten Bereich umfassen, wobei die Seitenwände des Zahnrads vorzugsweise die ringförmige Begrenzung der Unterseite des Zahnrads bilden. In dieser Ausführungsform umfasst die Unterseite vorzugsweise auch die bevorzugt kreisförmige Ebene innerhalb des Rings, der von den Seitenwänden des Zahnrads gebildet wird. Es ist vorzugsweise diese kreisförmige Ebene, die im Wesentlichen parallel zu dem Plateau auf der Oberseite des Zahnrads verläuft. Die kreisförmige Ebene ist vorzugsweise Bestandteil der Unterseite des Zahnrads. In dieser Ausgestaltung wird die Unterseite des Zahnrads vorzugsweise von einer virtuellen Ebene mit kreisförmiger Grundfläche gebildet. Es ist im Sinne der Erfindung bevorzugt, dass das Plateau den dritten Bereich der Oberseite des Zahnrads bildet, der im nächsten Absatz vorgestellt wird.

Es ist im Sinne der Erfindung bevorzugt, dass der Abstand zwischen der Unterseite und der Oberseite, betrachtet von dem Umfangsrand hin zur zentralen Öffnung des Zahnrads, in einem ersten Bereich im Wesentlichen konstant verläuft, in einem zweiten Bereich im Wesentlichen stetig zunimmt und in einem dritten Bereich im Wesentlichen konstant verläuft. Das bedeutet im Sinne der Erfindung bevorzugt, dass die Außenkontur bzw. die Oberseite des Zahnrads in einem ersten Bereich im Wesentlichen eben oder flach verläuft, in einem zweiten Bereich im Wesentlichen stetig ansteigt und in einem dritten Bereich erneut im Wesentlichen eben oder flach verläuft. Es ist im Sinne der Erfindung bevorzugt, dass die drei Bereiche durch ihre Gestaltung die geschwungene Außenkontur der Oberseite des Zahnrads der Werkzeugmaschine definieren.

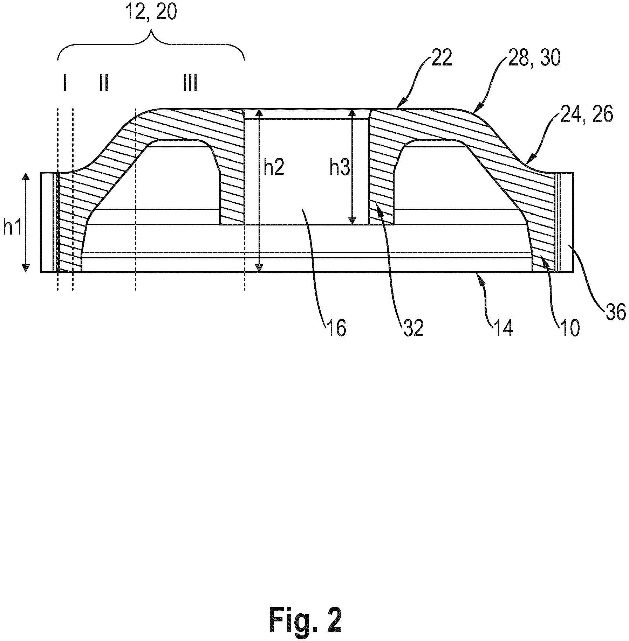

Vorzugsweise verläuft die Oberseite im Bereich des Umfangsrand zunächst im Wesentlichen flach bzw. eben. Das bedeutet im Sinne der Erfindung bevorzugt, dass Oberseite des Zahnrads in diesem ersten Bereich im Wesentlichen eben bzw. plan ausgebildet ist. Mit anderen Worten bedeutet dies, dass die Oberseite des Zahnrads in diesem ersten Bereich bevorzugt im Wesentlichen parallel zu der Unterseite des Zahnrads verläuft. In analoger Weise verläuft die Oberseite im Bereich der zentralen Öffnung des Zahnrads im Wesentlichen eben bzw. flach. Das bedeutet im Sinne der Erfindung bevorzugt, dass Oberseite des Zahnrads in diesem dritten Bereich im Wesentlichen eben bzw. plan ausgebildet ist bzw. ein Plateau bildet. Mit anderen Worten bedeutet dies, dass die Oberseite des Zahnrads in diesem dritten Bereich bevorzugt im Wesentlichen parallel zu der Unterseite des Zahnrads verläuft. Es ist im Sinne der Erfindung bevorzugt, dass die Oberseite des Zahnrads in dem ersten Bereich den ersten Abstand h1 zur Unterseite des Zahnrads aufweist und in dem dritten Bereich den zweiten Abstand h2. Mit anderen Worten liegen der erste und der dritte Bereich auf unterschiedlichen Höhenniveaus in Bezug auf die Unterseite des Zahnrands. Diese unterschiedlichen Höhenniveaus werden vorzugsweise durch den zweiten Bereich miteinander verbunden. Der zweite Bereich liegt vorzugsweise zwischen dem ersten und dem dritten Bereich der Oberseite des Zahnrads angeordnet. In diesem zweiten Bereich weist die Oberseite in einer Seitenansicht eine Steigung auf, wobei diese im Wesentlichen konstant ist, so dass sich ein linearer Verlauf der Oberseite des Zahnrads im zweiten Bereich ergibt. Die Steigung des zweiten Bereichs ist vorzugsweise so ausgebildet, dass die Oberseite von außen nach innen ansteigt, so dass das Plateau im zentralen Bereich des Zahnrads («dritter Bereich») den höchsten Punkt des Zahnrads darstellt. Vorzugsweise ist das Zahnrad im Bereich des Umfangrands somit flach ausgebildet und weist eine geringe, erste Höhe h1 auf, während das Zahnrad in seinem zentralen, dritten Bereich die größere, zweite Höhe h2 aufweist. Davon abgeleitet ist die Bezeichnung des Zahnrads als «glockenförmig», wobei die «Glocke» im Kontext der vorliegenden Erfindung in ihrem zentralen Bereich abgeplattet ausgebildet ist, d.h. ein Plateau bildet. Es ist im Sinne der Erfindung bevorzugt, dass das vorgeschlagene Zahnrad punktsymmetrisch um einen Mittelpunkt der bevorzugt kreisförmigen Grundfläche des Zahnrads ausgebildet ist. Darüber hinaus kann das Zahnrad als achsensymmetrisch in Bezug auf eine Menge von Achsen betrachtet werden, wobei diese Achsen jeweils durch den Mittelpunkt der kreisförmigen Grundfläche des Zahnrads verlaufen. Vorzugsweise kann eine zentrale, vertikale «virtuelle» Achse definiert werden, die beispielsweise mittig durch die Schnittdarstellung der Fig. 2 verlaufen kann. Die Ausführungen zum ersten, zweiten und dritten Bereich und der Gestaltung der Außenkontur sind in der Regel von außen nach innen beschrieben, wobei aus Ökonomiegründen zumeist lediglich eine Seite des Zahnrands beschrieben wird, also beispielsweise die rechte oder die linke Seite von der zentralen, vertikalen «virtuellen» Achse aus gesehen.

Die Wandungen des Zahnrads können in diesem zweiten Bereich im Wesentlichen parallel zueinander verlaufen. Es kann aber im Sinne der Erfindung auch bevorzugt sein, dass die Wandungen in einem äußeren Bereich in räumlicher Nähe zum Umfangsrand des Zahnrads eine größere Stärke aufweisen als in einem zentralen Bereich in räumlicher Nähe zu der zentralen Öffnung des Zahnrads. In dieser Ausgestaltung der Erfindung verlaufen die Wandungen im zweiten Bereich des Zahnrads nicht parallel zueinander, sondern sie verlaufen von außen nach innen aufeinander zu, ohne sich jedoch in dem vorgeschlagenen Zahnrad zu treffen.

Es ist im Sinne der Erfindung bevorzugt, dass ein erster Übergangsbereich zwischen dem ersten und dem zweiten Bereich geschwungen ausgebildet ist und einen kurvenförmigen, eine erste Krümmung aufweisenden Verlauf umfasst. Vorzugsweise ist diese erste Krümmung konkav ausgebildet, d.h. sie bildet ein Tal innerhalb der Oberseite des Zahnrads. Es ist im Sinne der Erfindung bevorzugt, dass der Übergang zwischen dem im Wesentlichen flach verlaufenden ersten Bereich und dem vorzugsweise ansteigenden zweiten Bereich geschwungen ausgebildet ist und die erste Krümmung aufweist.

Es ist im Sinne der Erfindung bevorzugt, dass ein zweiter Übergangsbereich zwischen dem zweiten und dem dritten Bereich geschwungen ausgebildet ist und einen kurvenförmigen, eine zweite Krümmung aufweisenden Verlauf umfasst. Vorzugsweise ist die zweite Krümmung konvex ausgebildet, d.h. sie bildet einen sanften Hügel innerhalb der Oberseite des Zahnrads, mit dem vorteilhafterweise das zweite Höhenniveau h2 des Zahnrads im dritten Bereich des Zahnrads erreicht wird. Die Krümmungen können beispielsweise so verlaufen, wie in Fig. 2 dargestellt.

Es ist im Sinne der Erfindung ganz besonders bevorzugt, dass die Krümmungen zueinander korrespondierend bzw. symmetrisch ausgebildet sind. Es kann in alternativen Ausführungsformen der Erfindung auch bevorzugt sein, dass die Krümmungen und/oder Radien unterschiedlich gestaltet sind.

Das bedeutet im Sinne der Erfindung bevorzugt, dass die erste und die zweite Krümmung im Wesentlichen punktsymmetrisch zueinander ausgebildet sind. Der Spiegelpunkt kann vorzugsweise mittig in dem zweiten Bereich der Oberseite des vorgeschlagenen Zahnrads liegen. Um diesen Punkt kann einer der beiden bevorzugt gekrümmt ausgebildeten Übergangsbereiche gedreht werden. Als Ergebnis einer solchen Drehung um 180 Grad würden die Kurven übereinander zu liegen kommen.

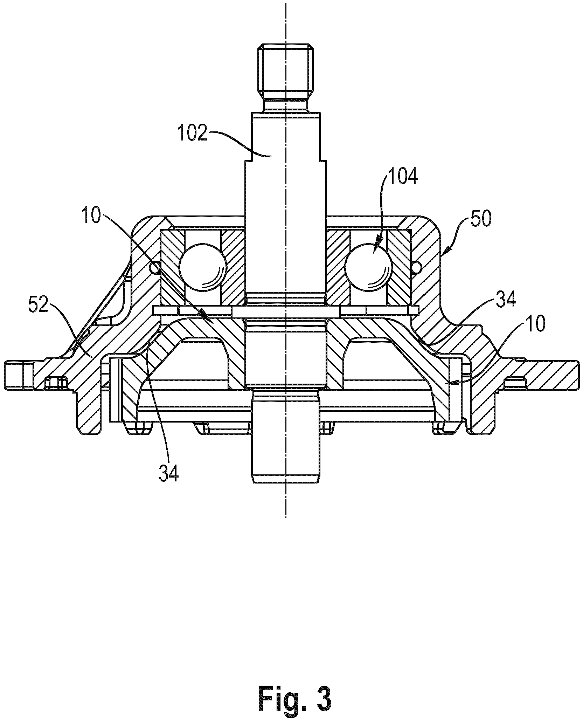

Der Verlauf der Oberseite des Zahnrads in den drei Bereichen, sowie ihre flachen und geschwungenen Verläufe und Krümmungen tragen dazu bei, dass sich die Oberseite des vorgeschlagenen Zahnrads optimal an den Deckel des Getriebes der Werkzeugmaschine anschmiegen kann, so dass die Oberseite des Zahnrads und der Getriebedeckel einen minimalen Spalt miteinander einschließen. Dieser minimale Spalt verhindert wirksam einen Austritt des Schmiermittels in eine Raumrichtung «nach oben». Dadurch verbleibt das Schmiermittel wie oben erläutert im unteren Bereich des Getriebes und kann vor allem auch nicht in die besonders schützenswerten Kugellager im oberen Bereich des Getriebes bzw. im Bereich des oberen Getriebeabschlusses gelangen. Somit werden diese besonders empfindlichen Bereiche durch die erfindungsgemäße Ausgestaltung der Oberseite des Zahnrads besonders gut vor eindringendem Schmiermittel geschützt. Mit anderen Worten kann mit der Erfindung eine besonders wirkungsvolle Getriebeabdichtung, insbesondere in eine Raumrichtung «nach oben», ermöglicht werden. Wie aus Fig. 3 hervorgeht, tritt dieses Anschmiegen insbesondere in dem ersten und in dem zweiten Bereich der Oberseite des vorgeschlagenen Zahnrads auf, während die Kugellager vorzugsweise oberhalb des dritten Bereichs, der vorzugsweise plateauförmig ausgebildet ist, angeordnet sind. Bei den Kugellagern kann es sich vorzugsweise um Rillenkugellager handeln.

Es ist im Sinne der Erfindung bevorzugt, dass das Zahnrad einen Wellenbereich aufweist, wobei der Wellenbereich die zentrale Öffnung des Zahnrads bildet. Die zentrale Öffnung des Zahnrads ist vorzugsweise dazu eingerichtet, eine Welle der Werkzeugmaschine aufzunehmen. Die zentrale Öffnung des Zahnrads wird daher bevorzugt auch als «Wellenbereich des Zahnrads» bezeichnet. Der Wellenbereich weist vorzugsweise glatt ausgebildete Wände auf, die einen Ring bzw. einen Ringzylinder bilden. Die Welle der Werkzeugmaschine liegt mit dem Zahnrad verbunden vor, wobei vorzugsweise das Zahnrad auf die Welle aufgepresst ist.

Es ist im Sinne der Erfindung bevorzugt, dass der Wellenbereich eine dritte Höhe h3 aufweist, wobei die dritte Höhe h3 größer ist als die erste Höhe h1 und wobei die dritte Höhe h3 kleiner ist als die zweite Höhe h2. Diese Größenverhältnisse sind mit dem Vorteil verbunden, dass die im Bereich des vorgeschlagenen Zahnrads auftretenden Drehmomente im gesamten Temperaturbereich sicher übertragen werden können. Dies wird insbesondere befördert durch eine vergleichsweise große Höhe h3 und eine entsprechenden Pressanpassung. Beispielsweise kann die erste Höhe h1 in einem Bereich von 9 bis 11 mm liegen, besonders bevorzugt bei 10 mm. Darüber hinaus kann die zweite Höhe h2 in einem Bereich von 16 bis 17 mm liegen, besonders bevorzugt bei 16,2 mm. Ferner kann die dritte Höhe h3 in einem Bereich von 11 bis 12 mm liegen, besonders bevorzugt bei 11,2 mm. Es ist im Sinne der Erfindung bevorzugt, dass die dritte Höhe h3 näher an der ersten Höhe h1 liegt als an der zweiten Höhe h2. Tests haben gezeigt, dass dadurch ein besonders stabiles Zahnrad bereitgestellt werden kann.

In einem zweiten Aspekt betrifft die Erfindung ein Getriebe einer Werkzeugmaschine. Die für das Zahnrad eingeführten Begriffe, Definitionen und technischen Vorteile gelten vorzugsweise für das Getriebe und die später vorgestellte Werkzeugmaschine analog. Die Werkzeugmaschine umfasst eine Welle zur Übertragung einer Bewegung von einem Motor auf ein Werkzeug und das Getriebe weist einen Getriebedeckel zur Abdeckung des Getriebes auf. Der Getriebedeckel und das vorgeschlagene Zahnrad bilden dabei einen Spalt zur Getriebeabdichtung. Die Welle der Werkzeugmaschine liegt mit einem vorgeschlagenen Zahnrad verbunden vor, wobei das Zahnrad vorzugsweise auf die Welle aufgepresst ist. Es ist im Sinne der Erfindung bevorzugt, dass in dem Getriebedeckel mittels eines Kugellagers die Welle montiert vorliegt. Auf der Welle ist das Zahnrad mit einem geschwungenen Querschnitt aufgepresst. Die geschwungene, glockenförmige Außenkontur hat die Aufgabe, im Zusammenspiel mit dem Getriebedeckel als Gegenpart, eine Art Labyrinth-Dichtung mit möglichst engem Spalt zu bilden, so dass ein Austritt von Schmiermittel in eine Raumrichtung "nach oben", d.h. in einen oberen Bereich des Getriebes, wirksam zu verhindern. Vorzugsweise wird der Spalt zwischen dem Zahnrad und dem Getriebedeckel durch die Außenkontur des Zahnrads minimiert, um einen Austritt von Schmiermittel aus dem Getriebe verhindern.

In einem dritten Aspekt betrifft die Erfindung eine Werkzeugmaschine mit einem vorgeschlagenen Getriebe bzw. mit einem vorgeschlagenen Zahnrad mit geschwungener Außenkontur.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung des Zahnrads
- Fig. 2: Schnittzeichnung durch eine bevorzugte Ausgestaltung des Zahnrads
- Fig. 3: Schnittzeichnung durch einen Teil einer bevorzugten Ausgestaltung des Getriebes bzw. der Werkzeugmaschine

### Ausführungsbeispiele und Figurenbeschreibung:

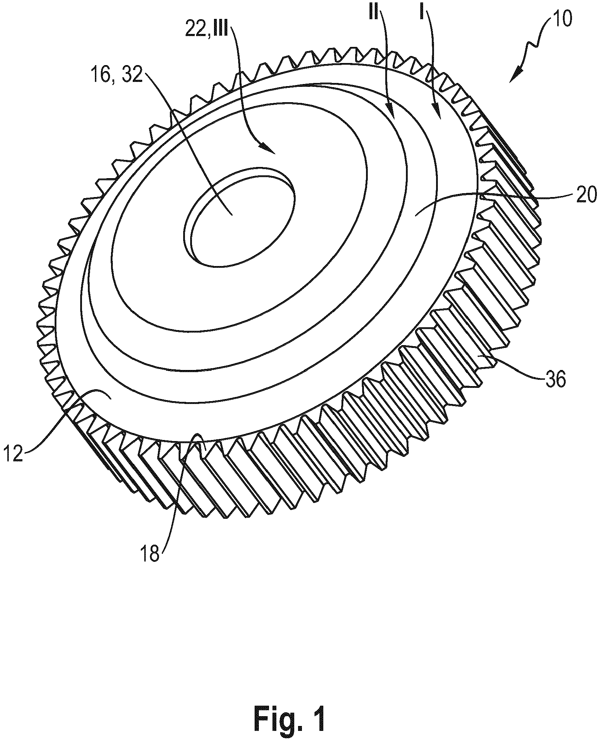

Figur 1 zeigt eine bevorzugte Ausgestaltung des vorgeschlagenen Zahnrads 10. An einem Umfangsrand 18 des Zahnrads 10 sind die Zähne 36 des Zahnrads 10 angeordnet. Dieser Bereich des Zahnrads 10 wird als sein äußerer Bereich bezeichnet. Die Oberfläche des Zahnrads 10 wird von einer Oberseite 12 gebildet, welche geschwungen ausgebildet ist und vorzugsweise eine glockenförmige Außenkontur 20 aufweist. Diese geschwungene Außenkontur 20 der Oberseite 12 des Zahnrads 10 wird insbesondere auch in Fig. 2 ersichtlich. Das Zahnrad 10 ist vorzugsweise kreisförmig ausgebildet und weist eine bevorzugt kreisförmige Grundfläche auf. Diese Grundfläche wird als Unterseite 14 des Zahnrads 10 bezeichnet, auch wenn es sich dabei nicht notwendigerweise um eine geschlossene Fläche handeln muss. Wie aus Fig. 2 hervorgeht, kann die Unterseite 14 auch von den vorzugsweise ringförmig ausgebildeten Seitenwänden des Zahnrads 10 begrenzt werden. Die Unterseite 14 des Zahnrads 10 ist vorzugsweise eben, d.h. plan, ausgebildet. Mithin liegt die Unterseite 14 des Zahnrads 10 in einer Ebene.

Mittig in dem Zahnrad 10 ist eine zentrale Öffnung 16 angeordnet, die dazu eingerichtet ist, eine Welle 102 einer Werkzeugmaschine 100 aufzunehmen. Die zentrale Öffnung 16 umfasst einen Wellenbereich 32, der in Kontakt mit der Welle 102 der Werkzeugmaschine 100 vorliegt bzw. mit der Welle 102 verbunden ist. Die Werkzeugmaschine 100 umfasst eine Welle 102, um die Bewegung eines Motors (nicht dargestellt) auf ein Werkzeug (nicht dargestellt) der Werkzeugmaschine 100 zu übertragen. Die Welle 102 der Werkzeugmaschine 100 liegt mit dem vorgeschlagenen Zahnrad 10 verbunden vor, wobei das Zahnrad 10 vorzugsweise auf die Welle 102 aufgepresst wird. Das Zahnrad 10 dient insbesondere dazu, dass Schmiermittel aus dem Getriebe 50 der Werkzeugmaschine 100 nicht aus diesem Getriebe 50 austreten kann. Das Getriebe 50 umfasst einen Getriebedeckel 52, der zusammen mit dem Zahnrad 10 bzw. seiner Oberseite 12 einen sehr engen Spalt 34 einschließt. Durch diesen bevorzugt sehr eng ausgebildeten Spalt 34 zwischen Oberseite 12 des Zahnrads 10 und Getriebedeckel 52 kann das Austreten des Schmiermittels verhindert werden. Die Oberseite 12 des Zahnrads 10 ist geschwungen ausgebildet und weist eine geschwungene Außenkontur 20 auf, die sich vorteilhafterweise an die Innen- oder Unterseite des Getriebedeckels 52 anschmiegt. Mit anderen Worten sind der Getriebedeckel 52, bzw. seine Innen- oder Unterseite, sowie das Zahnrad 10, bzw. seine Oberseite 12 bzw. seine Außenkontur 20, korrespondierend zueinander ausgebildet, so dass ein Spalt 34, der sich zwischen dem Zahnrad 10 und dem Getriebedeckel 52 ausbildet, besonders klein gehalten werden kann. Das Zusammenwirken des Zahnrads 10 und des Getriebedeckels 52 wird insbesondere in Fig. 3 dargestellt, die eine Schnittzeichnung durch einen Teil einer bevorzugten Ausgestaltung des Getriebes 50 bzw. der Werkzeugmaschine 100 darstellt. Die Werkzeugmaschine 100 selbst ist in keiner der Figuren abgebildet.

Zu erkennen sind in Fig. 1 auch die drei Bereiche I, II, III des vorgeschlagenen Zahnrads 10. Während die Außenkontur 20 des Zahnrads 10 in dem ersten Bereich I und dem dritten Bereich III flach, d.h. eben verläuft, steigt die Außenkontur 20 in dem zweiten Bereich II an. Zwischen den Bereichen I, II, III liegen die Übergangsbereiche 24, 28, in denen die Außenkontur 20 gekrümmt ist bzw. eine Kurve macht. Diese Übergangsbereiche 24, 28 der Bereiche I, II, III sind besonders gut in Fig. 2 zu erkennen. Vorzugsweise liegt im ersten Übergangsbereich 24 zwischen dem ersten Bereich I und dem zweiten Bereich II eine erste Krümmung 26 vor, die vorzugsweise konkav ausgebildet ist. Die Wölbung der ersten Krümmung 26 bildet somit vorzugsweise ein Tal. Es ist im Sinne der Erfindung bevorzugt, dass im zweiten Übergangsbereich 28 zwischen dem zweiten Bereich II und dem dritten Bereich III eine zweite Krümmung 30 vorliegt, die vorzugsweise konvex ausgebildet ist. Die Wölbung der zweiten Krümmung 30 bildet somit vorzugsweise einen Hügel oder einen sanft geschwungenen Berg. Es ist im Sinne der Erfindung bevorzugt, dass sich die Ausprägungen der ersten und der zweiten Wölbungen entsprechen. Das bedeutet, dass die Wölbungen kongruent zueinander wären, wenn man sie entsprechend spiegeln und/oder drehen würde. Durch diese spezielle geometrische Ausgestaltung der Oberseite 12 des Zahnrads 10 bzw. seiner Außenkontur 20 kann sich das Zahnrad 10 besonders gut an die Unterseite des Getriebedeckels 52 anschmiegen, so dass lediglich ein sehr kleiner, enger Spalt 34 zwischen dem Getriebedeckel 52 und dem Zahnrad 10 gebildet wird. Auf diese Weise wird das Getriebe 50 der Werkzeugmaschine 100 optimal abgedichtet, ohne dass zusätzliche Bauteile erforderlich sind. Insbesondere kann durch die spezielle geometrische Ausgestaltung der Außenkontur 20 des Zahnrads 10 eine Abdichtfunktion in das Zahnrad 10 bzw. seine Oberseite 12 integriert werden. Es ist im Sinne der Erfindung ganz besonders bevorzugt, dass das Zahnrad 10 durch seine Formgebung an der Oberseite 12 ein Abdichtfunktion bzw. Funktionsweise einer Labyrinth- und einer Schleuderscheibe nachahmt, wie sie in berührungsfreien Getriebeabdichtungen verwendet werden. Dadurch kann die vorgeschlagene Abdichtung mit dem vorgeschlagenen Zahnrad 10 mit der geschwungenen, glockenförmigen Außenkontur 20 auch besonders reibungs- und verlustfrei arbeiten, so dass ein hoher Wirkungsgrad des vorgeschlagenen Getriebes 50 ermöglicht werden kann.

Der erste Bereich I liegt im Bereich des Umfangsrandes 18 des vorgeschlagenen Zahnrads 10 vor, während der dritte Bereich III in räumlicher Nähe zur zentralen Öffnung 16 des Zahnrads 10 vorliegt. Zwischen dem ersten Bereich I und dem dritten Bereich III, die vorzugsweise beide eben ausgebildet sind, liegt der ansteigende zweite Bereich II vor. Der dritte Bereich III bildet vorzugsweise ein Plateau 22, wobei der Abstand zwischen dem Plateau 22 und der Unterseite 14 des Zahnrands 10 der zweiten Höhe h2 entspricht. Der Abstand zwischen der Unterseite 14 des Zahnrads 10 und der Oberseite 12 entspricht im ersten Bereich I, d.h. in räumlicher Nähe zum Umfangsrand 18, der ersten Höhe h1, wobei h1 < h2. Der erste Bereich I bildet vorzugsweise ein ersten Höhenniveau des Zahnrads 10, während der dritte Bereich III bzw. das Plateau 22 ein zweites Höhenniveau bilden. Die entsprechenden Höhen h1, h2 sind besonders gut in Fig. 2 zu erkennen, wobei Fig. 2 insbesondere eine Schnittzeichnung durch eine bevorzugte Ausgestaltung des Zahnrads 10 zeigt.

Darüber hinaus ist in Fig. 2 die dritte Höhe h3 eingezeichnet, die vorzugsweise der Höhe der Seitenwände der zentralen Öffnung 16 des Zahnrads 10 entspricht. Die Wände der zentralen Öffnung 16 reichen von oben betrachtet nicht ganz bis zur Unterseite 14 des Zahnrads 10, sondern enden nach einer Höhe h3. Der Wert der dritten Höhe h3 liegt betragsmäßig vorzugsweise zwischen den Werten der ersten Höhe h1 und der zweiten Höhe h2, d.h. h1 < h3 < h2. Die zentrale Öffnung 16 bildet vorzugsweise einen Wellenbereich 32, in den die Welle 102 der Werkzeugmaschine 100 aufgenommen werden kann.

### Bezugszeichenliste

- 10: Zahnrad
- 12: Oberseite des Zahnrads
- 14: Unterseite des Zahnrads
- 16: zentrale Öffnung des Zahnrads
- 18: Umfangsrand
- 20: Außenkontur des Zahnrads
- 22: Plateau
- 24: erster Übergangsbereich
- 26: erste Krümmung
- 28: zweiter Übergangsbereich
- 30: zweite Krümmung
- 32: Wellenbereich
- 34: Spalt
- 36: Zähne
- 50: Getriebe
- 52: Getriebedeckel
- 100: Werkzeugmaschine
- 102: Welle der Werkzeugmaschine
- 104: Kugellager
- I: erster Bereich
- II: zweiter Bereich
- III: dritter Bereich
- h1: erste Höhe
- h2: zweite Höhe
- h3: dritte Höhe

## Patentansprüche

1. Zahnrad (10) zur Verwendung in einem Getriebe (50) einer Werkzeugmaschine (100), wobei das Zahnrad (10) eine Oberseite (12) und eine Unterseite (14) aufweist, sowie eine zentrale Öffnung (16) zur Aufnahme einer Welle (102) der Werkzeugmaschine (100),
**dadurch gekennzeichnet, dass**
das Zahnrad (10) eine erste Höhe h1 und eine zweite Höhe h2 aufweist, wobei ein erster Abstand d1 zwischen der Oberseite (12) und der Unterseite (14) des Zahnrads (10) an einem Umfangsrand (18) den Wert h1 einnimmt und wobei ein zweiter Abstand d2 zwischen der Oberseite (12) und der Unterseite (14) des Zahnrads (10) im Bereich der zentralen Öffnung (16) den Wert h2 einnimmt, so dass die Oberseite (12) des Zahnrads (10) eine geschwungene Außenkontur (20) aufweist.

2. Zahnrad (10) nach Anspruch 1
**dadurch gekennzeichnet, dass**
die erste Höhe h1 kleiner ist als die zweite Höhe h2.

3. Zahnrad (10) nach Anspruch 1 oder 2
**dadurch gekennzeichnet, dass**
die Oberseite (12) des Zahnrads (10) ein im Wesentlichen planes Plateau (22) umfasst, wobei ein Abstand zwischen dem Plateau (22) und der Unterseite (14) des Zahnrads (10) den Wert h2 einnimmt.

4. Zahnrad (10) nach einem der vorhergehenden Ansprüche
**dadurch gekennzeichnet, dass**
ein Abstand zwischen der Oberseite (12) und der Unterseite (14) des Zahnrads (10) von dem Umfangsrand (18) zur zentralen Öffnung (16) in einem ersten Bereich (I) im Wesentlichen konstant verläuft, in einem zweiten Bereich (II) im Wesentlichen stetig zunimmt und in einem dritten Bereich (III) im Wesentlichen konstant verläuft.

5. Zahnrad (10) nach Anspruch 4
**dadurch gekennzeichnet, dass**
ein erster Übergangsbereich (24) zwischen dem ersten Bereich (I) und dem zweiten Bereich (II) geschwungen ausgebildet ist und einen kurvenförmigen, eine erste Krümmung (26) aufweisenden Verlauf umfasst.

6. Zahnrad (10) nach Anspruch 5
**dadurch gekennzeichnet, dass**
die erste Krümmung (26) konkav ausgebildet ist.

7. Zahnrad (10) nach einem der Ansprüche 4 bis 6
**dadurch gekennzeichnet, dass**
ein zweiter Übergangsbereich (28) zwischen dem zweiten Bereich (II) und dem dritten Bereich (III) geschwungen ausgebildet ist und einen kurvenförmigen, eine zweite Krümmung (30) aufweisenden Verlauf umfasst.

8. Zahnrad (10) nach Anspruch 7
**dadurch gekennzeichnet, dass**
die zweite Krümmung (30) konvex ausgebildet ist.

9. Zahnrad (10) nach Ansprüchen 6 und 8
**dadurch gekennzeichnet, dass**
die Krümmungen (26, 30) zueinander korrespondierend bzw. symmetrisch ausgebildet sind.

10. Zahnrad (10) nach einem der vorhergehenden Ansprüche
**dadurch gekennzeichnet, dass**
das Zahnrad (10) einen Wellenbereich (32) aufweist, wobei der Wellenbereich (32) die zentrale Öffnung (16) des Zahnrads (10) bildet.

11. Zahnrad (10) nach Anspruch 10
**dadurch gekennzeichnet, dass**
der Wellenbereich (16) eine dritte Höhe h3 aufweist, wobei die dritte Höhe h3 größer ist als die erste Höhe h1 und wobei die dritte Höhe h3 kleiner ist als die zweite Höhe h2.

12. Zahnrad (10) nach Anspruch 11
**dadurch gekennzeichnet, dass**
die dritte Höhe h3 näher an der ersten Höhe h1 liegt als an der zweiten Höhe h2.

13. Getriebe (50) einer Werkzeugmaschine (100), wobei die Werkzeugmaschine (100) eine Welle (102) zur Übertragung einer Bewegung von einem Motor auf ein Werkzeug umfasst und wobei das Getriebe (50) einen Getriebedeckel (52) zur Abdeckung des Getriebes (50) aufweist,
**dadurch gekennzeichnet, dass**
der Getriebedeckel (52) und ein Zahnrad (10) nach einem der vorhergehenden Ansprüche einen Spalt (34) zur Getriebeabdichtung bilden

14. Getriebe (50) nach Anspruch 13
**dadurch gekennzeichnet, dass**
der Spalt (34) zwischen dem Zahnrad (10) und dem Getriebedeckel (52) durch die Außenkontur (20) des Zahnrads (10) minimiert wird, um einen Austritt von Schmiermittel aus dem Getriebe (50) zu verhindern.

15. Werkzeugmaschine (100) mit einem Getriebe (50) nach einem der Ansprüche 13 oder 14 und/oder mit einem Zahnrad (10) nach einem der Ansprüche 1 bis 12.
